(19) Europäisches Patentamt
European Patent Office
Office européen des brevets

(11) EP 2 147 020 B1

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: **08749776.4**

(22) Anmeldetag: **28.04.2008**

(51) Int Cl.:
***C08F 2/18*** *(2006.01)* ***C08F 2/22*** *(2006.01)*
***C09D 5/02*** *(2006.01)*

(86) Internationale Anmeldenummer:
**PCT/EP2008/055145**

(87) Internationale Veröffentlichungsnummer:
**WO 2008/135422 (13.11.2008 Gazette 2008/46)**

# (54) VERFAHREN ZUR HERSTELLUNG EINER WÄSSRIGEN KOMPOSITPARTIKEL-DISPERSION

METHOD FOR PRODUCING AN AQUEOUS COMPOSITE PARTICLE DISPERSION

PROCÉDÉ DE PRODUCTION D'UNE DISPERSION AQUEUSE À PARTICULES COMPOSITES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.05.2007 EP 07107552**

(43) Veröffentlichungstag der Anmeldung:
**27.01.2010 Patentblatt 2010/04**

(73) Patentinhaber: **BASF SE**
**67056 Ludwigshafen (DE)**

(72) Erfinder:
- **TUCHBREITER, Arno**
**67346 Speyer (DE)**
- **WIESE, Harm**
**69514 Laudenbach (DE)**

(56) Entgegenhaltungen:
**EP-A- 0 505 230 WO-A-03/000760**

Bemerkungen:
Die Akte enthält technische Angaben, die nach dem Eingang der Anmeldung eingereicht wurden und die nicht in dieser Patentschrift enthalten sind.

EP 2 147 020 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der vorliegenden Erfindung ist ein Verfahren zur Herstellung einer wässrigen Dispersion von aus Polymerisat und feinteiligem anorganischem Feststoff aufgebauten Partikeln (wässrige Kompositpartikel-Dispersion), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, welches dadurch gekennzeichnet ist, dass

a) eine stabile wässrige Dispersion des wenigstens einen anorganischen Feststoffs eingesetzt wird, welche dadurch charakterisiert ist, dass sie bei einer Anfangsfeststoffkonzentration von ≥ 0,1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmessers ≤100 nm aufweisen (wässrige Feststoffdispersion),

b) als ethylenisch ungesättigte Monomere ≥ 0,01 und ≤ 10 Gew.-% wenigstens eines, eine siliziumhaltige funktionelle Gruppe aufweisenden ethylenisch ungesättigten Monomeren A (Silanmonomer) und ≥ 90 und ≤ 99,99 Gew.-% wenigstens eines weiteren, sich von den Monomeren A unterscheidenden ethylenisch ungesättigten Monomeren B eingesetzt werden und sich die Mengen an Monomeren A und B zu 100 Gew.-% addieren (Gesamtmonomerenmenge),

c) 1 bis 1000 Gew.-Teile an anorganischem Feststoff pro 100 Gew.-Teilen ethylenisch ungesättigten Monomeren eingesetzt werden, dabei

d) wenigstens eine Teilmenge des anorganischen Feststoffs in einem wässrigen Polymerisationsmedium in Form einer wässrigen Feststoffdispersion vorgelegt wird, daran anschließend

e) wenigstens eine Teilmenge der Monomeren A während einer Zeitdauer von ≥ 5 und ≤ 240 Minuten dem wässrigen Polymerisationsmedium zudosiert werden, und daran anschließend

f) die gegebenenfalls verbliebene Restmenge des anorganischen Feststoffs, die gegebenenfalls verbliebene Restmenge der Monomeren A und die Gesamtmenge der Monomeren B dem wässrigen Polymerisationsmedium unter Polymerisationsbedingungen zudosiert werden.

Gegenstand der vorliegenden Erfindung sind ebenfalls die nach dem erfindungsgemäßen Verfahren zugänglichen wässrigen Kompositpartikel-Dispersionen und deren Verwendung sowie die aus den wässrigen Kompositpartikel-Dispersionen zugänglichen Kompositpartikelpulver und deren Verwendung.

Wässrige Kompositpartikel-Dispersionen sind allgemein bekannt. Es handelt sich dabei um fluide Systeme, die aus mehreren ineinander verschlungenen Polymerisatketten bestehenden Polymerisatknäuel (die sogenannte Polymermatrix) und feinteiligem anorganischen Feststoff aufgebaute Partikel in wässrigem Dispergiermedium in disperser Verteilung befindlich enthalten. Der mittleren Durchmesser der Kompositpartikel liegt in der Regel im Bereich ≥ 10 nm und ≤ 1000 nm, oft im Bereich ≥ 50 nm und ≤ 400 nm und häufig im Bereich ≥ 100 nm und ≤ 300 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 01/18081, WO 01/29106, WO 03/000760, WO 06/072464 sowie in Long et al., Tianjin Daxue Xuebao 1991, 4, Seiten 10 bis 15, Bourgeat-Lami et al.,Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410 offenbart.

Für die vorliegende Erfindung ist von folgendem Stand der Technik auszugehen.

Van Herk et al. offenbaren in Macromolecules 2006, 39, Seiten 4654 bis 4656, die Verkapselung von u.a. mit Silanmonomeren kovalent modifizierten Schichtsilikaten in Latexpartikeln nach der sogenannten "starved-feed"-Emulsionspolymerisationsmethode unter Emulgator-freien Bedingungen. Die Schichtsilikate werden dabei in Dichlormethan modifiziert und vor dem Einsatz in der Emulsionspolymerisation über mehrere Prozessschritte aufgearbeitet.

Bourgeat-Lami et al, beschreiben in Progress in Solid State Chemistry 2006, 34, Seiten 121 bis 137, die hydrophob kovalente Modifizierung von Schichtsilikaten in Toluol, deren Aufreinigung und anschließendem Einsatz in der Emulsionspolymerisation.

In der WO 02/24756 wird die Verwendung von hydrophobierten Schichtsilikaten in der Suspensions- und Miniemulsionspolymerisation offenbart.

Darüber hinaus offenbart die WO 02/24758 den Einsatz von "leicht modifizierten" hydrophobierten Schichtsilikaten in der Emulsionspolymerisation, wobei jedoch die spezifische Modifizierung nicht beschrieben wird.

Aufgabe der vorliegenden Erfindung war die Bereitstellung eines neuen Herstellvertahrens für stabile wässrige Kompositpartikel-Dispersionen unter Verwendung von Silanmonomeren.

Für das erfindungsgemäße Verfahren wird klares Wasser, beispielsweise klares Trinkwasser, insbesondere vorteilhaft jedoch entionisiertes Wasser eingesetzt, dessen Gesamtmenge so bemessen wird, dass sie ≥ 30 und ≤ 99 Gew.-% und vorteilhaft ≥ 35 und ≤ 95 Gew.-% und insbesondere vorteilhaft ≥ 40 und ≤ 90 Gew.-%, bezogen auf die wässrige Kompositpartikel-Dispersion, beträgt.

Für das erfindungsgemäße Verfahren sind alle diejenigen feinteiligen anorganischen Feststoffe geeignet, welche stabile wässrige Dispersionen ausbilden, die bei einer Anfangsfeststoffkonzentration von ≥ 0,1 Gew.-%, bezogen auf die wässrige Dispersion des wenigstens einen anorganischen Feststoffs, noch eine Stunde nach ihrer Herstellung oder nach homogener Dispergierung der sedimentierten Feststoffe, ohne weiteres Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen.

Die quantitative Bestimmung der Anfangsfeststoffkonzentration und der Feststoffkonzentration nach einer Stunde erfolgt im Rahmen dieser Schrift über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die Bestimmung der Teilchengröße des feinteiligen anorganischen Feststoffs sowie der Kompositpartikel erfolgt im Rahmen dieser Schrift generell nach der Methode der quasielastischen Lichtstreuung (DIN-ISO 13321) mit einem High Performance Particle Sizer (HPPS) der Fa. Malvern Instruments Ltd.

Als erfindungsgemäß einsetzbare feinteilige anorganische Feststoffe sind prinzipiell Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH und Optigel® EX 0482 (Marken der Südchemie AG), Saponit® SKS-20 und Hektorit® SKS 21 (Marken der Hoechst AG) sowie Laponite® RD und Laponite® GS (Marken

der Rockwood Holdings Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20°C und 1 atm (= 1,013 bar absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Produkte der Nanofil®-, Optigel®-, Cloisite®- (Marken der Fa. Südchemie AG), Somasif®-, Lucentite®- (Marken der Fa. CBC Japan Co., Ltd.), Saponit®- Hektorit®- (Marken der Fa. Höchst AG) sowie Laponite®-Reihen (Marke der Fa. Rockwood Holdings, Inc.), Eisen-(II)-oxid, Eisen-(III)-oxid, Eisen-(II/III)-oxid, Titandioxid, Hydroxylapatit, Zinkoxid und Zinksulfid.

Bevorzugt ist der wenigstens eine feinteilige anorganische Feststoff ausgewählt aus der Gruppe umfassend Siliziumdioxid, Schichtsilikate, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid. Insbesondere bevorzugt sind siliziumhaltige Verbindungen, wie pyrogene Kieselsäure, kolloidale Kieselsäure und/oder Schichtsilikate.

Vorteilhaft können auch die kommerziell verfügbaren Verbindungen der Aerosil®-, Levasil®-, Ludox®-, Nyacol®- und Bindzil®-Marken (Siliziumdioxid), Nanofil®-, Optigel®-, Somasif®-, Cloisite®-, Lucentite®-, Saponit®-, Hektorit®- sowie Laponite®-Marken (Schichtsilikate), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) im erfindungsgemäßen Verfahren eingesetzt werden.

Die zur Herstellung der Kompositpartikel einsetzbaren feinteiligen anorganischen Feststoffe sind so beschaffen, dass die im wässrigen Polymerisationsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤70 nm, ≤ 60 nm, ≤ 50 nm, ≤ 40 nm, ≤ 30 nm, ≤ 20 nm oder ≤ 10 nm und alle Werte dazwischen aufweisen. Mit Vorteil werden feinteilige anorganische Feststoffe eingesetzt, welche einen Teilchendurchmesser ≤ 50 nm aufweisen.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung von stabilen Feststoffdispersionen erfolgt dabei häufig direkt bei der Synthese der feinteiligen anorganischen Feststoffe in wässrigem Medium oder alternativ durch Eindispergieren der feinteiligen anorganischen Feststoffe in das wässrige Polymerisationsmedium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Vorteilhaft für die Herstellung einer wässrigen Kompositpartikel-Dispersion sind solche feinteiligen anorganischen Feststoffe geeignet, deren wässrige Feststoffdispersion bei einer Anfangsfeststoffkonzentration von ≥ 0,1 Gew.-%, bezogen auf die wässrige Feststoffdispersion, noch eine Stunde nach ihrer Herstellung oder nach homogener Dispergierung der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤

100 nm ausweisen. Üblich sind Anfangsfeststofflconzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 0,5 Gew.-%, ≥ 1 Gew.-%, ≥ 2 Gew.-%, ≥ 3 Gew.-%, ≥ 4 Gew.-% oder ≥ 5 Gew.-% und alle Werte dazwischen, jeweils bezogen auf die wässrige Feststoffdispersion, eingesetzt werden. Bezogen auf 100 Gew.-Teile an ethylenisch ungesättigten Monomeren (Gesamtmonomerenmenge), werden bei der Herstellung wässriger Kompositpartikel-Dispersionen 1 bis 1000 Gew.-Teile, vorteilhaft 5 bis 300 Gew.-Teile und insbesondere vorteilhaft 10 bis 200 Gew.-Teile des wenigstens einen feinteiligen anorganischen Feststoffes verwendet.

Das erfindungsgemäße Verfahren erfolgt dergestalt, dass in Verfahrensschritt d) wenigstens eine Teilmenge, vorteilhaft ≥ 10. ≥ 30 oder ≥ 50, Gew.-% und insbesondere vorteilhaft ≥ 60, ≥ 70, ≥ 80 oder ≥ 90 Gew.-% der Gesamtmenge des anorganischen Feststoffs im wässrigen Polymerisationsmedium vorgelegt wird. Die gegebenenfalls verbliebene Restmenge an anorganischem Feststoff wird dem wässrigen Polymerisationsmedium in Verfahrensschritt f) unter Polymerisationsbedingungen diskontinuierlich in einer oder mehreren Teilmengen oder kontinuierlich im gleichbleibenden oder sich verändernden Mengenstrom, insbesondere in Form einer wässrigen Feststoffdispersion zudosiert. Mit Vorteil wird jedoch in Verfahrensschritt d) die Gesamtmenge des anorganischen Feststoffs in Form einer wässrigen Feststoffdispersion vorgelegt.

Bei der Herstellung der wässrigen Kompositpartikel-Dispersionen werden allgemein Dispergierhilfsmittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergierhilfsmittel ausschließlich Emulgatoren eingesetzt, deren relative Molekulargewichte im Unterschied zu den Schutzkolloiden üblicherweise unter 1500 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z. B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxitate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z. B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel I

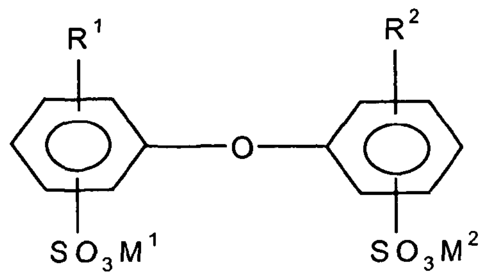

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen I, in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z. B. aus US-A 4,269,749, und im Handel erhältlich.

Geeignete kationenaktive Emulgatoren sind in der Regel einen $C_6$- bis $C_{18}$-Alkyl-, - Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung der wässrigen Kompositpartikel-Dispersionen zwischen 0,1 bis 10 Gew.-%, oft 0,5 bis 7,0 Gew.-% und häufig 1,0 bis 5,0 Gew.-% an Dispergierhilfsmittel, jeweils bezogen auf die Gesamtmenge an wässriger Kompositpartikel-Dispersion, eingesetzt. Bevorzugt werden Emulgatoren, insbesondere nichtionische und/ oder anionische Emulgatoren verwendet. Mit besonderem Vorteil werden anionische Emulgatoren eingesetzt.

Erfindungsgemäß ist es möglich, gegebenenfalls eine Teil- oder die Gesamtmenge an Dispergierhilfsmittel im Polymerisationsgefäß als Bestandteil des eine Teil- oder die Gesamtmenge des anorganischen Feststoffs enthaltenden wässrigen Polymerisationsmediums vorzulegen [Verfahrensschritt d)]. Es ist aber auch möglich, die Gesamtmenge oder die gegebenenfalls verbliebene Restmenge an Dispergierhilfsmittel während des Verfahrensschrittes e) oder während des Verfahrensschrittes f) dem wässrigen Polymerisationsmedium zuzuführen. Die Gesamtmenge oder die gegebenenfalls verbliebene Restmenge an Dispergierhilfsmittel kann dem wässrigen Polymerisationsmedium dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion in Verfahrensschritt f) kontinuierlich mit gleichbleibenden Mengenströmen, insbesondere als Bestandteil einer wässrigen Monomerenemulsion.

Erfindungsgemäß werden als ethylenisch ungesättigte Monomere $\geq$ 0,01 und $\leq$ 10 Gew.-% wenigstens eines, eine siliziumhaltige funktionelle Gruppe aufweisenden ethylenisch ungesättigten Monomeren A (Silanmonomer) und $\geq$ 90 und $\leq$ 99,99 Gew.-% wenigstens eines weiteren, sich von den Monomeren A unterscheidenden ethylenisch ungesättigten Monomeren B eingesetzt, wobei sich die Mengen an Monomeren A und B zu 100 Gew.-% addieren (Gesamtmonomerenmenge).

Als Monomere A kommen alle radikalisch copolymerisierbaren ethylenisch ungesättigten Monomere in Betracht, welche wenigstens eine silziumhaltige funktionelle Gruppe aufweisen, wie beispielsweise Vinylalkoxysilane, wie insbesondere Vinyltrimethoxysilan, Vinyltriethoxysilan, Vinyltriisopropoxysilan, Vinyltriphenoxysilan, Vinyltris(dimethylsiloxy)silan, Vinyltris(2-methoxyethoxy)silan, Vinyltris(3-methoxypropoxy)silan und/oder Vinyltris(trimethylsiloxy)silan, Acryloxysilane, wie insbesondere 2-(Acryloxyethoxy)trimethylsilan, Acryloxymethyltrimethylsilan, (3-Acryloxypropyl)dimethylmethoxysilan, (3-Acryloxypropyl)methylbis(trimethylsiloxy)silan, (3-Acryloxypropyl)methyldimethoxysilan, (3-Acryloxypropyl)trimethoxysilan und/oder (3-Acryloxypropyl)tris(trimethylsiloxy)silan, Methacryloxysilane, wie insbesondere (3-Methacryloxypropyl)trimethoxysilan, (3-Methacryloxypropyl)triethoxysilan (Methacryloxymethyl)methyldiethoxysilan und/oder (3-Methacryloxypropyl)methyldiethyloxysilan. Erfindungsgemäß besonders vorteilhaft werden Acryloxysilane und/oder Methacryloxysilane, insbesondere Methacryloxysilane, wie bevorzugt (3-Methacryloxypropyl)trimethoxysilan, (3-Methacryloxypropyl)triethoxysilan, (Methacryloxymethyl)methyldiethoxysilan und/oder (3-Methacryloxypropyl)methyldiethyloxysilan eingesetzt.

Im Verfahrensschritt e) wird wenigstens eine Teilmenge der Monomeren A während einer Zeitdauer ≥ 5 und ≤ 240 Minuten, vorteilhaft ≥ 30 und ≤ 120 Minuten und insbesondere vorteilhaft ≥ 45 und ≤ 75 Minuten dem wässrigen Polymerisationsmedium zudosiert. Dabei erfolgt die Dosierung vorteilhaft mit einem kontinuierlichen gleichbleibenden Mengenstrom. In Verfahrensschritt e) werden erfindungsgemäß ≥ 0,1 und ≤ 100 Gew.-%, vorteilhaft ≥ 5 und ≤ 70 Gew.-% und insbesondere vorteilhaft ≥ 10 und ≤ 50 Gew.-% an Monomeren A, bezogen auf die Gesamtmenge der Monomeren A, dem wässrigen Polymerisationsmedium zudosiert.

In der Regel erfolgt Verfahrensschritt e) bei einer Temperatur des wässrigen Polymerisationsmediums ≥ 20°C, mit Vorteil bei einer Temperatur ≥ 50 und ≤ 100°C und mit besonderem Vorteil bei einer Temperatur ≥ 75 und ≤ 95°C.

Die gegebenenfalls verbliebene Restmenge an Monomeren A kann dem wässrigen Polymerisationsmedium in Verfahrensschritt f) diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren A während der Polymerisationsreaktion in Verfahrensschritt f) kontinuierlich mit gleichbleibenden Mengenströmen, insbesondere als Bestandteil einer wässrigen Emulsion der Monomeren B.

Bezogen auf die Gesamtmonomerenmenge werden erfindungsgemäß ≥ 0,01 und ≤ 10 Gew.-%, vorteilhaft ≥ 0,1 und ≤5 Gew.-% und insbesondere vorteilhaft ≥ 0,5 und ≤ 3 Gew.-% an Monomeren A eingesetzt, entsprechend einer Menge an Monomeren B ≥ 90 und ≤ 99,99 Gew.-%, vorteilhaft ≥ 95 und ≤ 99,9 Gew.-% und insbesondere vorteilhaft ≥ 97 und ≤ 99,5 Gew.-%.

Erfindungsgemäß vorteilhaft beträgt die Gesamtmenge an Monomeren A ≥ 0,5 und ≤ 3 Gew.-%, bezogen auf die Gesamtmonomerenmenge, wobei in Verfahrensschritt e) ≥ 10 und ≤ 50 Gew.-% der Gesamtmenge an Monomeren A zudosiert werden.

Als Monomere B kommen u.a. insbesondere in einfacher Weise mit den Silanmonomeren radikalisch copolymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl und -2-ethylhexylester, Maleinsäuredimethylester oder Maleinsäure-di-n-butylester, Nitrile α, β-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren B normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20°C, 1 atm (absolut)] lediglich eine mäßige bis geringe Löslichkeit auf.

Weitere Monomere B, die üblicherweise die innere Festigkeit der Verfilmungen der Polymermatrix erhöhen, weisen normalerweise wenigstens eine Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren B, in Mengen von bis zu 5 Gew.-%, häufig 0,1 bis 3 Gew.-% und oft 0,5 bis 2 Gew.-% zur Polymerisation eingesetzt.

Daneben können als Monomere B zusätzlich solche ethylenisch ungesättigten Monomere BS eingesetzt werden, die entweder wenigstens eine Säuregruppe und/oder deren entsprechendes Anion oder solche ethylenisch ungesättigten Monomere BA, die wenigstens eine Amino-, Amido-, Ureido- oder N-heterocyclische Gruppe und/oder deren am Stickstoff protonierten oder alkylierten Ammoniumderivate enthalten. Bezogen auf die Gesamtmenge der zu polymerisierenden Monomeren B, beträgt die Menge an Monomeren BS bzw. Monomeren BA bis zu 10 Gew.-%, oft 0,1 bis 7 Gew.-% und häufig 0,2 bis 5 Gew.-%.

Als Monomere BS werden ethylenisch ungesättigte Monomere mit wenigstens einer Säuregruppe eingesetzt.

Dabei kann die Säuregruppe beispielsweise eine Carbonsäure-, Sulfonsäure-, Schwefelsäure-, Phosphorsäure- und/oder Phosphonsäuregruppe sein. Beispiele für solche Monomere BS sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere BS eingesetzt.

Als Monomere BA werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere BA, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino)ethylacrylat (beispielsweise kommerziell verfügbar als Norsocryl® A-DAME der Fa. Elf Atochem), 2-(N,N-Dimethylamino)ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-isopropylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-isopropylamino)propylacrylat und 3-(N,N-Di-iso-propylamino)propylmethacrylat.

Beispiele für Monomere BA, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere BA, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere BA, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere BA folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere BA in der am Stickstoff protonierten quartären Ammoniumform vorliegen.

Als Monomere BA, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Elf Atochem), 2-(N,N,N-Trimethylammonium)ethylmethacrylatchlorid (beispielsweise kommerziell verfügbar als Norsocryl® MADQUAT MC 75 der Fa. Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid

(beispielsweise kommerziell verfügbar als Norsocryl® ADAMQUAT BZ 80 der Fa. Elf Atochem), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethylacrylatchlorid, 2-(N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium) propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium) ethylmethacrylatchlorid verwendet.

Selbstverständlich können auch Gemische der vorgenannten ethylenisch ungesättigten Monomere BS bzw. BA eingesetzt werden.

Mit besonderem Vorteil wird die Zusammensetzung der Monomeren B so gewählt, dass nach deren alleiniger Polymerisation ein Polymerisat resultieren würde, dessen Glasübergangstemperatur ≤ 100 °C, bevorzugt ≤60 °C, insbesondere ≤ 40 °C und häufig ≥ -30°C und oft ≥-20°C oder ≥ -10°C beträgt.

Üblicherweise erfolgt die Bestimmung der Glasübergangstemperatur nach DIN 53 765 (Differential Scanning Calorimetry, 20 K/min, midpoint-Messung).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$..... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Erfindungsgemäß wird die Gesamtmenge an Monomeren B dem wässrigen Polymerisationsmedium in Verfahrensschritt f) zudosiert. Die Monomeren B können dem wässrigen Polymerisationsmedium dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren B kontinuierlich mit gleichbleibenden Mengenströmen, insbesondere als Bestandteil einer wässrigen Monomerenemulsion.

Zur Herstellung der erfindungsgemäßen wässrigen Kompositpartikel-Dispersion durch radikalische Polymerisation kommen alle diejenigen radikalischen Polymerisationsinitiatoren in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkaümetabisulfite, beispielsweise Kalium- und/ oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmonomerenmenge, 0,1 bis 5 Gew.-%.

Erfindungsgemäß kann die Gesamtmenge des Radikalinitiators im wässrigen Reaktionsmedium vor Auslösung der Polymerisationsreaktion im Verfahrensschritt d) oder e) vorgelegt werden. Es ist aber auch möglich, gegebenenfalls lediglich eine Teilmenge des Radikalinitiators im wässrigen Reaktionsmedium vor Auslösung der Polymerisationsreaktion im Verfahrensschritt d) oder e) vorzulegen und dann im Verfahrensschritt f) unter Polymerisationsbedingungen während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Auslösung der Polymerisationsreaktion wird der Start der Polymerisationsreaktion der im wässrigen Polymerisationsmedium vorliegenden Monomeren nach Radikalbildung des Radikalinitiators verstanden. Dabei kann die Auslösung der Polymerisationsreaktion durch Zugabe von Radikalinitiator zum wässrigen Polymerisationsmedium unter Polymerisationsbedingungen erfolgen [Verfahrensschritt f)]. Es ist aber auch möglich, dass eine Teil- oder die Gesamtmenge des Radikalinitiators dem die vorgelegten Monomeren enthaltenden wässrigen Polymerisationsmedium unter Bedingungen, welche nicht geeignet sind eine Polymerisationsreaktion auszulösen, beispielsweise bei tiefer Temperatur, zugegeben werden [Verfahrensschritte d) und e)] und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit $\leq$ 3 Stunden, insbesondere vorteilhaft $\leq$ 1 Stunde und ganz besonders vorteilhaft $\leq$ 30 Minuten aufweist und dabei immer genügend Startradikale zur Verfügung stehen, um die Polymerisationsreaktion auszulösen bzw. aufrechtzuerhalten.

Als Reaktionstemperatur für die radikalische wässrige Emulsionspolymerisation in Anwesenheit des feinteiligen anorganischen Feststoffs kommt der gesamte Bereich von 0 bis 170°C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise wird in Anwesenheit leichtflüchtiger Monomere B, beispielsweise Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm (absolut) unter Sauerstoffausschluss, insbesondere unter Inertgasatmosphäre, wie beispielsweise unter Stickstoff oder Argon durchgeführt.

Wesentlich für das erfindungsgemäße Verfahren ist, dass das wässrige Polymerisationsmedium prinzipiell in untergeordnetem Maße auch organische Lösungsmittel, wie beispielsweise Methanol, Ethanol, Isopropanol, Butanole, aber auch Aceton etc. enthalten kann. Von Bedeutung ist allerdings, dass die Menge an organischem Lösungsmittel so bemessen ist, dass sie am Ende von Verfahrensschritt e) $\leq$ 10 Gew.-%, vorteilhaft $\leq$ 5 Gew.-% und insbesondere vorteilhaft $\leq$ 2 Gew.-%, jeweils bezogen auf die Gesamtmenge an Wasser der erfindungsgemäß erhältlichen wässrigen Kompositpartikel-Dispersion, beträgt. Mit Vorteil sind erfindungsgemäß keinerlei solche Lösungsmittel vorhanden.

Neben den vorgenannten Komponenten können im erfindungsgemäßen Verfahren zur Herstellung der wässrigen Kompositpartikel-Dispersion optional auch radikalkettenübertragende Verbindungen eingesetzt werden, um die Molekulargewichte der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren

Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Abhängig von der Stabilität der eingesetzten wässrigen Feststoffdispersionen können die Verfahrensschritte e) und f) im sauren, neutralen oder basischen pH-Wertbereich durchgeführt werden. Beim Einsatz von Schichtsilikaten beträgt der pH-Wert vorteilhaft ≥ 5 und ≤ 11, insbesondere vorteilhaft ≥ 6 und ≤ 10 (jeweilige Probe gemessen bei 20 °C und 1 atm).

Die erfindungsgemäß zugänglichen wässrigen Kompositpartikel-Dispersionen weisen üblicherweise einen Gesamtfeststoffgehalt von 1 bis 70 Gew.-%, häufig von 5 bis 65 Gew.-% und oft von 10 bis 60 Gew.-% auf.

Die erfindungsgemäß zugänglichen Kompositpartikel besitzen in der Regel Teilchendurchmesser von > 10 und ≤ 1000 nm, häufig ≤ 500 nm sowie oft ≤ 250 nm. Die Bestimmung der Teilchengröße der Kompositpartikel erfolgt im Rahmen dieser Schrift generell nach der Methode der quasielastischen Lichtstreuung (DIN-ISO 13321) mit einem High Performance Particle Sizer (HPPS) der Fa. Malvern Instruments Ltd.

Die erfindungsgemäß zugänglichen Kompositpartikel können unterschiedliche Strukturen aufweisen. Dabei können die Kompositpartikel ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist.

Selbstverständlich können die nach Abschluß der Polymerisationsreaktion im wässrigen Polymerisationsmedium verbliebenen Restmengen an nicht umgesetzten Monomeren A und/oder B durch Dampf- und/oder Inertgasstrippung und/oder durch chemische Desodorierung, wie sie beispielsweise in den Schriften DE-A 44 19 518, EP-A 767 180 oder DE-A 38 34 734 beschrieben sind, entfernt werden, ohne dass sich die Eigenschaften der wässrigen Kompositpartikel-Dispersionen nachteilig verändern. Aus den über das erfindungsgemäße Verfahren zugänglichen wässrigen Kompositpartikel-Dispersionen lassen sich in einfacher Weise anorganische Feststoffteilchen enthaltende Polymerisatfilme herstellen. Diese Polymerisatfilme weisen gegenüber den keine anorganischen Feststoffteilchen enthaltenden Polymerisatfilmen in der Regel eine erhöhte mechanische Festigkeit, ein geringeres Weißanlaufen, eine bessere Haftung an mineralischen Oberflächen, eine verbesserte Resistenz gegenüber organischen Lösemitteln sowie eine erhöhte Kratzfestigkeit, Blockfestigkeit und Wärmestandfestigkeit auf.

Wässrige Kompositpartikel-Dispersionen, welche nach dem beschriebenen erfindungsgemäßen Verfahren hergestellt werden, eignen sich daher insbesondere als Bindemittel, zur Herstellung einer Schutzschicht, als Klebstoff, zur Modifizierung von Zement- und Mörtelformulierungen oder in der medizinischen Diagnostik (vgl. z.B. K. Mosbach und L. Andersson, Nature, 1977, 270, Seiten 259 bis 261; P.L. Kronick, Science 1978, 200, Seiten 1074 bis 1076; US-A 4,157,323). Darüber hinaus lassen sich die Kompositpartikel auch als Katalysatoren in verschiedenen wässrigen Dispersionssystemen einsetzen.

Auch sei festgehalten, dass die erfindungsgemäß zugänglichen wässrigen Kompositpartikel-Dispersionen in einfacher Weise zu redispergierbaren Kompositpartikelpulvern trockenbar sind (z. B. Gefriertrocknung oder Sprühtrocknung). Dies gilt insbesondere dann, wenn die Glasübergangstemperatur der Polymermatrix der erfindungsgemäß zugänglichen Kompositpartikel ≥ 50°C, vorzugsweise ≥ 60 °C, besonders bevorzugt ≥ 70 °C, ganz besonders bevorzugt ≥ 80 °C und insbesondere bevorzugt ≥ 90°C bzw. ≥ 100 °C beträgt. Die Kompositpartikelpulver eignen sich u.a. als Additive für Kunststoffe, Komponenten für Tonerformulierungen oder Zusatzstoffe in elektrophotographischen Anwendungen sowie als Komponenten in Zement- und Mörtelformulierungen.

Das erfindungsgemäße Verfahren ermöglicht den einstufigen und lösungsmittelfreien Zugang zu wässrigen Kompositpartikel-Dispersionen, unter Verwendung von Silanmonomeren. Darüber hinaus weisen die aus den erfindungsgemäßen wässrigen Kompositpartikel-Dispersionen zugänglichen Verfilmungen verbesserte Reißkraft- und/oder Reißdehnungswerte auf. Auch zeigen die Verfilmungen eine homogenere Verteilung des anorganischen Feststoffs.

Die Erfindung soll anhand der nachfolgenden nichteinschränkenden Beispiele erläutert werden.

Beispiele

a) Herstellung der wässrigen Kompositpartikel-Dispersionen

Beispiel 1

In einem 2 l-Vierhalskolben, ausgerüstet mit einem Rückflusskühler, einem Thermometer, einem mechanischen Rührer sowie einer Dosiervorrichtung, wurden bei 20 bis 25 °C (Raumtemperatur) und 1 atm (absolut) unter Stickstoffatmosphäre und Rühren (200 Umdrehungen pro Minute) 489 g entionisiertes Wasser, 20 g pulverförmiges Schichtsilikat

Laponite® RDS (Marke der Firma Rockwood Holdings, Inc.; mittlerer Durchmesser im delaminierten, dispergierten Zusand: 20 bis 50 nm) innerhalb von 5 Minuten zugegeben. Um das Schichtsilikat vollständig zu delaminieren wurde die Vorlage für 15 Minuten weiter gerührt (200 Umdrehungen pro Minute) und anschließend auf 82 °C aufgeheizt. Anschließend wurde über eine Zulaufleitung innerhalb einer Stunde 1,2 g (3-Methacryloxypropyl)trimethoxysilan kontinuierlich zudosiert. Dann wurden eine Lösung bestehend aus 40 g entionisiertem Wasser, 2,1 g einer 10 gew.-%igen wässrigen Natriumhydroxidlösung und 0,6 g Natriumperoxodisulfat über eine weitere separate Zulaufleitung innerhalb von 2 Minuten hinzugegeben und 5 Minuten gewartet. Anschließend wurde das Reaktionsgemisch auf 85 °C aufgeheizt. Parallel dazu stellte man als Zulauf 1 eine homogene Emulsion bestehend aus 401 g entionisiertem Wasser, 8,9 g einer 45 gew.-%igen wässrige Lösung von Dowfax® 2A1, 18,4 g einer 10 gew.-%igen wässrigen Natriumhydroxidlösung, 4 g Methacrylsäure, 118 g n-Butylacrylat, 60 g Methylmethacrylat, 16 g Ethylacrylat und 1,7 g (3-Methacryloxypropyl)trimethoxysilan und als Zulauf 2 eine Mischung aus 161 g entionisiertem Wasser, 8,5 g einer 10 gew.-%igen wässrigen Natriumhydroxidlösung und 2,4 g Natriumperoxodisulfat, her. Die beiden Zuläufe wurden nach dem Aufheizen gleichzeitig beginnend wie folgt über separate Zulaufleitungen zudosiert. Zulauf 1 wurde innerhalb von 2 Stunden kontinuierlich zudosiert, wobei die Dosierrate in den ersten 40 Minuten 3,14 g/Minute und danach 6,28 g/Minute betrug. Parallel dazu wurde Zulauf 2 in zwei Stunden mit kontinuierlichem Mengenstrom zudosiert. Abschließend wurde die Reaktionsmischung noch 30 Minuten bei Reaktionstemperatur gerührt und schließlich auf Raumtemperatur abgekühlt.

Die so erhaltene wässrige Kompositpartikel-Dispersion wies einen Feststoffgehalt von 18,5 Gew.-%, bezogen auf das Gesamtgewicht der wässrigen Kompositpartikeldispersion, auf.

Der Feststoffgehalt wurde generell bestimmt, indem ca. 1 g der Kompositpartikel-Dispersion in einem offenen Aluminiumtigel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Der pH-Wert der Kompositpartikel-Dispersion betrug 8,1.

Die Bestimmung der Teilchengröße der Kompositpartikel erfolgte generell nach der Methode der quasielastischen Lichtstreuung (DIN-ISO 13321) mit einem High Performance Particle Sizer (HPPS) der Fa. Malvern Instruments Ltd. Es wurde eine mittlere-Teilchengröße von 102 nm ermittelt.

Mittels der Analytischen Ultrazentrifuge konnte auch nachgewiesen werden, dass die erhaltenen Kompositpartikel eine homogene Dichte von 1,33 g/cm$^3$ aufwiesen. Es konnten keine freien Schichtsilikat-Feststoffteilchen nachgewiesen werden (vgl. hierzu auch S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Beispiel 2

Die Herstellung von Beispiel 2 erfolgte analog Beispiel 1 mit dem Unterschied, dass 0,2 g (3-Methacryloxypropyl) trimethoxysilan vorgelegt und 2,7 g (3-Methacryloxypropyl)trimethoxysilan als Bestandteil der Monomerenemulsion dosiert wurden.

Die so erhaltene wässrige Kompositpartikel-Dispersion wies einen Feststoffgehalt von 18,7 Gew.-%, bezogen auf das Gesamtgewicht der wässrigen Kompositpartikel-Dispersion, auf.

Der pH-Wert der Kompositpartikel-Dispersion betrug 8,2.

Es wurde eine mittlere Teilchengröße von 110 nm ermittelt.

Mittels der Analytischen Ultrazentrifuge konnten keine freien Schichtsilikate nachgewiesen werden. Darüber hinaus wiesen die Kompositpartikel eine homogene Dichte von 1,33 g/cm$^3$ auf.

Beispiel 3

Die Herstellung von Beispiel 3 erfolgte analog Beispiel 1 mit dem Unterschied, dass 0,1 g (3-Methacryloxypropyl) trimethoxysilan vorgelegt und 1,4 g (3-Methacryloxypropyl)trimethoxysilan als Bestandteil der Monomerenemulsion dosiert wurde.

Die so erhaltene wässrige Kompositpartikel-Dispersion wies einen Feststoffgehalt von 18,5 Gew.-%, bezogen auf das Gesamtgewicht der wässrigen Kompositpartikel-Dispersion, auf.

Der pH-Wert der Kompositpartikel-Dispersion betrug 8,1.

Es wurde eine mittlere Teilchengröße von 108 nm ermittelt.

Mittels der Analytischen Ultrazentrifuge konnten keine freien Schichtsilikate nachgewiesen werden. Darüber hinaus wiesen die Kompositpartikel eine homogene Dichte von 1,33 g/cm$^3$ auf.

Vergleichsbeispiel 1

Die Herstellung von Vergleichsbeispiel 1 erfolgte analog Beispiel 1 mit dem Unterschied, dass die Gesamtmenge an 3-Methacryloxypropyltrimethoxysilan als Bestandteil der Monomerenemulsion in Zulauf 1 dosiert wurde.
Die so erhaltene wässrige Kompositpartikel-Dispersion wies einen Feststoffgehalt von 18,6 Gew.-%, bezogen auf das Gesamtgewicht der wässrigen Kompositpartikel-Dispersion, auf.
Der pH-Wert der Kompositpartikel-Dispersion betrug 8,2.
Es wurde eine mittlere Teilchengröße von 110 nm ermittelt.
Mittels der Analytischen Ultrazentrifuge konnte ein Anteil von ca. 10 Gew.-% an freien Schichtsilikaten nachgewiesen werden.

Beispiel 4

Die Herstellung von Beispiel 4 erfolgte analog Beispiel 1 mit dem Unterschied, dass als Zulauf 1 eine Emulsion bestehend aus 401 g entionisiertem Wasser, 8,9 g einer 45 gew.-%igen wässrigen Lösung von Dowfax® 2A1, 18,4 g einer 10 gew.-%igen Lösung von Natriumhydroxidlösung, 4 g Methacrylsäure, 118 g n-Butylacrylat, 76 g Methylmethacrylat und 1,7 g (3-Methacryloxypropyl)trimethoxysilan eingesetzt wurde.
Die so erhaltene wässrige Kompositpartikel-Dispersion wies einen Feststoffgehalt von 18,2 Gew.-%, bezogen auf das Gesamtgewicht der wässrigen Kompositpartikel-Dispersion, auf.
Der pH-Wert der Kompositpartikeldispersion betrug 8,2.
Es wurde eine mittlere Teilchengröße von 107 nm ermittelt.
Mittels der Analytischen Ultrazentrifuge konnten keine freien Schichtsilikate nachgewiesen werden.

Beispiel 5

Die Herstellung von Beispiel 5 erfolgte analog Beispiel 1 mit dem Unterschied, dass als Zulauf 1 eine Emulsion bestehend aus 401 g entionisiertem Wasser, 8,9 g einer 45 gew.-%igen wässrigen Lösung von Dowfax® 2A1, 18,4 g einer 10 gew.-%igen Lösung von Natriumhydroxidlösung, 31 g Methylacrylat, 25 g Styrol, 4,5 g Methacrylsäure, 62 g n-Butylacrylat, 31 g 2-Ethylhexylacrylat und 1,7 g (3-Methacryloxypropyl)trimethoxysilan eingesetzt wurde. Die Zulaufrate für die ersten 40 Minuten betrug 2,92 g/Minute, danach 5,84 g/Minute.
Die so erhaltene wässrige Kompositpartikel-Dispersion wies einen Feststoffgehalt von 15,9 Gew.-%, bezogen auf das Gesamtgewicht der wässrigen Kompositpartikel-Dispersion, auf.
Der pH-Wert der Kompositpartikel-Dispersion betrug 8,3.
Es wurde eine mittlere Teilchengröße von 105 nm ermittelt.
Mittels der Analytischen Ultrazentrifuge konnten keine freien Schichtsilikate nachgewiesen werden.

Beispiel 6

Die Herstellung von Beispiel 6 erfolgte analog Beispiel 1 mit dem Unterschied, dass Optigel® SH (Marke der Fa. Südchemie AG) anstelle von Laponite® RDS als Schichtsilikat eingesetzt wurde.
Die so erhaltene wässrige Kompositpartikel-Dispersion wies einen Feststoffgehalt von 18,9 Gew.-%, bezogen auf das Gesamtgewicht der wässrigen Kompositpartikel-Dispersion, auf.
Der pH-Wert der Kompositpartikel-Dispersion betrug 8,1.
Es wurde eine mittlere Teilchengröße von 105 nm ermittelt.
Mittels der Analytischen Ultrazentrifuge konnten keine freien Schichtsilikate nachgewiesen werden.

Beispiel 7

Die Herstellung von Beispiel 7 erfolgte analog Beispiel 5 mit dem Unterschied, dass Optigel® EX 0482 (Marke der Fa. Südchemie AG) anstelle von Laponite® RDS als Schichtsilikat eingesetzt wurde.
Die so erhaltene wässrige Kompositpartikel-Dispersion wies einen Feststoffgehalt von 18,5 Gew.-%, bezogen auf das Gesamtgewicht der wässrigen Kompositpartikel-Dispersion, auf.
Der pH-Wert der Kompositpartikel-Dispersion betrug 8,1.
Es wurde eine mittlere Teilchengröße von 103 nm ermittelt.
Mittels der Analytischen Ultrazentrifuge konnten keine freien Schichtsilikate nachgewiesen werden.

b) Anwendungstechnische Untersuchungen

Reißkraft und Reißdehnung

Von den wässrigen Kompositpartikel-Dispersionen der Beispiele 1, 2, und 3 sowie vom Vergleichsbeispiel 1 wurden Verfilmungen hergestellt und von diesen die Reißkraft bzw. die Reißdehnung bestimmt.

Die bruchmechanischen Eigenschaften der vorgenannten Kompsitpartikel-Dispersionsfilme wurden im Zugversuch nach DIN 53504 bestimmt. Die Dicke der Dispersionsfilme betrug 0,4 bis 0,5 mm und die Abzugsgeschwindigkeit 25,4 mm/min. Vor Beginn der Untersuchung wurden die entsprechenden Mengen der Kompositpartikel-Dispersionen auf einen Teflon-Träger aufgetragen und zur Ausbildung der Dispersionsfilme 14 Tage im Klimaraum bei 23 °C und 50 % relativer Luftfeuchtigkeit gelagert. Die in der nachfolgenden Tabelle angegebenen Werte sind jeweils die Mittelwerte aus jeweils 5 separaten Messungen.

| Beispiel | Reißkraft RK ($N/mm^2$) | Reißdehnung RD (%) | Zähigkeit (RK x RD) |
|---|---|---|---|
| 1 | 3,0 | 730 | 2190 |
| 2 | 2,7 | 750 | 2025 |
| 3 | 2,1 | 850 | 1785 |
| Vergleichsbeispiel 1 | 1,6 | 700 | 1120 |

**Patentansprüche**

1. Verfahren zur Herstellung einer wässrigen Dispersion von aus Polymerisat und feinteiligem anorganischem Feststoff aufgebauten Partikeln (wässrige Kompositpartikel-Dispersion), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, **dadurch gekennzeichnet, dass**

   a) eine stabile wässrige Dispersion des wenigstens einen anorganischen Feststoffs eingesetzt wird, welche **dadurch** charakterisiert ist, dass sie bei einer Anfangsfeststoffkonzentration von ≥ 0,1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen (wässrige Feststoffdispersion),
   b) als ethylenisch ungesättigte Monomere ≥ 0,01 und ≤ 10 Gew.-% wenigstens eines, eine siliziumhaltige funktionelle Gruppe aufweisenden ethylenisch ungesättigten Monomeren A (Silanmonomer) und ≥ 90 und ≤ 99,99 Gew.-% wenigstens eines weiteren, sich von den Monomeren A unterscheidenden ethylenisch ungesättigten Monomeren B eingesetzt werden und sich die Mengen an Monomeren A und B zu 100 Gew.-% addieren (Gesamtmonomerenmenge),
   c) 1 bis 1000 Gew.-Teile an anorganischem Feststoff pro 100 Gew.-Teilen ethylenisch ungesättigten Monomeren eingesetzt werden, dabei
   d) wenigstens eine Teilmenge des anorganischen Feststoffs in einem wässrigen Polymerisationsmedium in Form einer wässrigen Feststoffdispersion vorgelegt wird, daran anschließend
   e) wenigstens eine Teilmenge der Monomeren A während einer Zeitdauer von ≥ 5 und ≤ 240 Minuten dem wässrigen Polymerisationsmedium zudosiert werden, und daran anschließend
   f) die gegebenenfalls verbliebene Restmenge des anorganischen Feststoffs, die gegebenenfalls verbliebene Restmenge der Monomeren A und die Gesamtmenge der Monomeren B dem wässrigen Polymerisationsmedium unter Polymerisationsbedingungen zudosiert werden.

2. Verfahren nach Anspruch 1, **dadurch gekennzeichnet, dass** in Verfahrensschritt d) ≥ 50 Gew.-% des anorganischen Feststoffs vorgelegt werden.

3. Verfahren nach Anspruch 1 oder 2, **dadurch gekennzeichnet, dass** in Verfahrensschritt d) die Gesamtmenge des anorganischen Feststoffs vorgelegt wird.

4. Verfahren nach einem der Ansprüche 1 bis 3, **dadurch gekennzeichnet, dass** Verfahrensschritt e) bei einer Temperatur ≥ 50 und ≤ 100°C durchgeführt wird.

5. Verfahren nach einem der Ansprüche 1 bis 4, **dadurch gekennzeichnet, dass** in Verfahrensschritt e) ≥ 5 und ≤ 70 Gew.-% der Gesamtmenge der Monomeren A zudosiert werden.

6. Verfahren nach einem der Ansprüche 1 bis 5, **dadurch gekennzeichnet, dass** der anorganische Feststoff siliziumhaltig ist.

7. Verfahren nach einem der Ansprüche 1 bis 6, **dadurch gekennzeichnet, dass** als anorganischer Feststoff pyrogene Kieselsäure, kolloidale Kieselsäure und/oder ein Schichtsilikat eingesetzt wird.

8. Verfahren nach einem der Ansprüche 1 bis 7, **dadurch gekennzeichnet, dass** das wässrige Polymerisationsmedium am Ende von Verfahrensschritt e) ≤ 10 Gew.-% an organischem Lösungsmittel, bezogen auf die Gesamtmenge an Wasser enthält.

9. Verfahren nach einem der Ansprüche 1 bis 8, **dadurch gekennzeichnet, dass** das als Monomer A (3-Methacryloxypropyl)trimethoxysilan, (3-Methacryloxypropyl)triethoxysilan, (Methacryloxymethyl)methyldiethoxysilan und/oder (3-Methacryloxypropyl)methyldiethyloxysilan eingesetzt wird.

10. Verfahren nach einem der Ansprüche 1 bis 9, **dadurch gekennzeichnet, dass** als Dispergierhilfsmittel ein anionischer und/oder nichtionischer Emulgator eingesetzt wird.

11. Verfahren nach einem der Ansprüche 1 bis 10, **dadurch gekennzeichnet, dass** die Gesamtmenge der Monomeren A ≥ 0,5 und ≤ 3 Gew.-%, bezogen auf die Gesamtmonomerenmenge beträgt, wobei im Verfahrensschritt e) ≥ 10 und ≤ 50 Gew.-% der Gesamtmenge der Monomeren A zudosiert werden.

12. Verfahren nach einem der Ansprüche 1 bis 11, **dadurch gekennzeichnet, dass** die Zusammensetzung der Monomeren B so gewählt wird, dass nach deren alleiniger Polymerisation ein Polymerisat resultieren würde, dessen Glasübergangstemperutur ≤ 60 °C beträgt.

13. Wässrige Kompositpartikel-Dispersion, erhältlich nach einem Verfahren gemäß einem der Ansprüche 1 bis 12.

14. Verwendung einer wässrigen Kompositpartikel-Dispersion gemäß Anspruch 13, als Bindemittel, zur Herstellung einer Schutzschicht, als Klebstoff, zur Modifizierung von Zement- und Mörtelformulierungen oder in der medizinischen Diagnostik.

15. Kompositpartikelpulver, erhältlich durch Trocknung einer wässrigen Kompositpartikel-Dispersion gemäß Anspruch 13.

**Claims**

1. A process for preparing an aqueous dispersion of particles composed of addition polymer and finely divided inorganic solid (aqueous composite-particle dispersion), in which process ethylenically unsaturated monomers are dispersely distributed in aqueous medium and polymerized by the method of free-radical aqueous emulsion polymerization by means of at least one free-radical polymerization initiator in the presence of at least one dispersely distributed, finely divided inorganic solid and at least one dispersant, and which process comprises

a) using a stable aqueous dispersion of said at least one inorganic solid, said dispersion having the characteristic features that at an initial solids concentration of ≥ 0.1% by weight, based on the aqueous dispersion of said at least one inorganic solid, it still comprises in dispersed form one hour after its preparation more than 90% by weight of the originally dispersed solid and its dispersed solid particles have a diameter ≤ 100 nm (aqueous dispersion of solids),
b) using as ethylenically unsaturated monomers ≥ 0.01% and ≤ 10% by weight of at least one ethylenically unsaturated monomer A containing a silicon functional group (silane monomer) and ≥ 90% and ≤ 99.99% by weight of at least one further ethylenically unsaturated monomer B which is different from the monomers A, the amounts of monomers A and B adding to 100% by weight (total monomer amount),

c) using 1 to 1000 parts by weight of inorganic solid per 100 parts by weight of ethylenically unsaturated monomers, and
d) including at least a portion of the inorganic solid in an initial charge in an aqueous polymerization medium in the form of an aqueous dispersion of solids, then
e) metering at least a portion of the monomers A into the aqueous polymerization medium over a period of ≥ 5 and ≤ 240 minutes, and subsequently
f) metering any remainder of the inorganic solid, any remainder of the monomers A, and the total amount of the monomers B into the aqueous polymerization medium under polymerization conditions.

**2.** The process according to claim 1, in step d) of which ≥ 50% by weight of the inorganic solid is included in the initial charge.

**3.** The process according to claim 1 or 2, in step d) of which the total amount of the inorganic solid is included in the initial charge.

**4.** The process according to any one of claims 1 to 3, step e) of which is conducted at a temperature ≥ 50 and ≤ 100°C.

**5.** The process according to any one of claims 1 to 4, in step e) of which ≥ 5% and ≤ 70% by weight of the total amount of the monomers A are metered in.

**6.** The process according to any one of claims 1 to 5, wherein the inorganic solid is silicon-containing.

**7.** The process according to any one of claims 1 to 6, wherein pyrogenic (fumed) silica, colloidal silica and/or a phyllosilicate is used as inorganic solid.

**8.** The process according to any one of claims 1 to 7, wherein at the end of step e) the aqueous polymerization medium contains ≤ 10% by weight of organic solvent, based on the total amount of water.

**9.** The process according to any one of claims 1 to 8, wherein use is made as monomer A of (3-methacryloyloxypropyl) trimethoxysilane, (3-methacryloyloxypropyl)triethoxysilane, (methacryloyloxymethyl)methyldiethoxysilane and/or (3-methacryloyloxypropyl)methyldiethyloxysilane.

**10.** The process according to any one of claims 1 to 9, wherein an anionic and/or non-ionic emulsifier is used as dispersant.

**11.** The process according to any one of claims 1 to 10, wherein the total amount of the monomers A is ≥ 0.5% and ≤ 3% by weight, based on the total monomer amount, ≥ 10% and ≤ 50% by weight of the total amount of the monomers A being metered in step e) of the process.

**12.** The process according to any one of claims 1 to 11, wherein the composition of the monomers B is chosen such that polymerization of them alone would result in an addition polymer having a glass transition temperature ≤ 60°C.

**13.** An aqueous dispersion of composite particles, obtainable by a process according to any one of claims 1 to 12.

**14.** The use of an aqueous dispersion of composite particles according to claim 13 as a binder, for producing a protective coat, as an adhesive, for modifying cement formulations or mortar formulations, or in medical diagnostics.

**15.** A composite-particle powder obtainable by drying an aqueous dispersion of composite particles according to claim 13.

## Revendications

**1.** Procédé pour la préparation d'une dispersion aqueuse de particules formées à partir d'un polymère et d'un solide inorganique finement divisé (dispersion aqueuse de particules composites), dans lequel des monomères éthyléniquement insaturés sont répartis de manière dispersée dans un milieu aqueux et polymérisés au moyen d'au moins un initiateur de polymérisation radicalaire en présence d'au moins un solide inorganique finement divisé, réparti de manière dispersée et d'au moins un adjuvant de dispersion selon le procédé de la polymérisation radicalaire en émulsion aqueuse, **caractérisé**
**en ce que**

a) on utilise une dispersion aqueuse stable dudit au moins un solide inorganique, qui est **caractérisée en ce qu'**à une concentration de départ en solide 0,1% en poids, par rapport à la dispersion aqueuse dudit au moins un solide inorganique, elle contient encore, une heure après sa préparation, plus de 90% en poids du solide disposé à l'origine sous forme dispersée et dont les particules solides dispersées présentent un diamètre ≤ 100 nm (dispersion aqueuse de solide),

b) on utilise comme monomères éthyléniquement insaturés ≥ 0,01 et ≤ 10% en poids d'au moins un monomère A, éthyléniquement insaturé, présentant un groupe fonctionnel contenant du silicium (monomère silane) et ≥ 90 et ≤ 99,99% en poids d'au moins un autre monomère B éthyléniquement insaturé, différent des monomères A et les quantités de monomères A et B s'ajoutent à 100% en poids (quantité totale de monomètres),

c) on utilise 1 à 1000 parties en poids de solide inorganique par 100 parties en poids de monomères éthyléniquement insaturés

d) en disposant au préalable au moins une quantité partielle du solide inorganique dans un milieu de polymérisation aqueux sous forme d'une dispersion aqueuse de solide, puis

e) en ajoutant en dosant au moins une quantité partielle des monomères A pendant un laps de temps de ≥ 5 et ≤ 240 minutes au milieu aqueux de polymérisation, puis

f) en ajoutant en dosant la quantité résiduelle éventuelle du solide inorganique, la quantité résiduelle éventuelle des monomères A et la quantité totale des monomères B dans le milieu aqueux de polymérisation dans des conditions de polymérisation.

**2.** Procédé selon la revendication 1, **caractérisé en ce que** dans l'étape de procédé d), on dispose au préalable ≥ 50% en poids du solide inorganique.

**3.** Procédé selon la revendication 1 ou 2, **caractérisé en ce que** dans l'étape de procédé d), on dispose au préalable la quantité totale du solide inorganique.

**4.** Procédé selon l'une quelconque des revendications 1 à 3, **caractérisé en ce que** l'étape de procédé e) est réalisée à une température ≥ 50 et ≤ 100°C

**5.** Procédé selon l'une quelconque des revendications 1 à 4, **caractérisé en ce que** dans l'étape de procédé e), on dose ≥ 5 et ≤ 70% en poids de la quantité totale des monomères A.

**6.** Procédé selon l'une quelconque des revendications 1 à 5, **caractérisé en ce que** le solide inorganique contient du silicium.

**7.** Procédé selon l'une quelconque des revendications 1 à 6, **caractérisé en ce qu'**on utilise comme solide inorganique de la silice pyrogène, de la silice colloïdale et/ou un silicate à couches.

**8.** Procédé selon l'une quelconque des revendications 1 à 7, **caractérisé en ce que** le milieu aqueux de polymérisation contient à la fin de l'étape de procédé e) ≤ 10% en poids de solvant organique, par rapport à la quantité totale d'eau.

**9.** Procédé selon l'une quelconque des revendications 1 à 8, **caractérisé en ce qu'**on utilise comme monomère A du (3-méthacryloxypropyl)triméthoxysilane, du (3-méthacryloxypropyl) triéthoxysilane, du (méthacryloxyméthyl)méthyldiéthoxysilane et/ou du (3-méthacryloxypropyl)méthyldiéthyloxysilane.

**10.** Procédé selon l'une quelconque des revendications 1 à 9, **caractérisé en ce qu'**on utilise comme adjuvant de dispersion un émulsifiant anionique et/ou non ionique.

**11.** Procédé selon l'une quelconque des revendications 1 à 10, **caractérisé en ce que** la quantité totale des monomères A est ≥ 0,5 et ≤ 3% en poids, par rapport à la quantité totale de monomères, où, dans l'étape e), on ajoute en dosant ≥ 10 et ≤ 50% en poids de la quantité totale des monomères A.

**12.** Procédé selon l'une quelconque des revendications 1 à 11, **caractérisé en ce que** la composition des monomères B est choisie de manière telle qu'après uniquement leur polymérisation, on obtiendrait un polymère dont la température de transition vitreuse est ≤ 60°C.

**13.** Dispersion aqueuse de particules composites, pouvant être obtenue selon un procédé selon l'une quelconque des

revendications 1 à 12.

**14.** Utilisation d'une dispersion aqueuse de particules composites selon la revendication 13, comme liant, pour la préparation d'une couche de protection, comme adhésif, pour la modification de formulations de ciment et de mortier ou dans le diagnostic médical.

**15.** Poudre de particules composites, pouvant être obtenue par séchage d'une dispersion aqueuse de particules composites selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3544500 A
- US 4421660 A
- US 4608401 A
- US 4981882 A
- EP 104498 A
- EP 505230 A
- EP 572128 A
- GB 2227739 A
- WO 0118081 A
- WO 0129106 A
- WO 03000760 A
- WO 06072464 A
- WO 0224756 A
- WO 0224758 A
- US 4269749 A
- DE 4419518 A
- EP 767180 A
- DE 3834734 A
- US 4157323 A


### In der Beschreibung aufgeführte Nicht-Patentliteratur


- **Long et al.** *Tianjin Daxue Xuebao,* 1991, vol. 4, 10-15
- **Bourgeat-Lami et al.** *Die Angewandte Makromolekulare Chemie,* 1996, vol. 242, 105-122
- **Paulke et al.** *Synthesis Studies of Paramagnetic Polystyrene Latex Particles in Scientific and Clinical Applications of Magnetic Carriers,* 1997, 69-76
- **Armes et al.** *Advanced Materials,* 1999, vol. 11 (5), 408-410
- **Van Herk et al.** *Macromolecules,* 2006, vol. 39, 4654-4656
- **Bourgeat-Lami et al.** *Progress in Solid State Chemistry,* 2006, vol. 34, 121-137
- **S.E. Harding et al.** Analytical Ultracentrifugation in Biochemistry and Polymer Science. Royal Society of Chemistry, 1992
- **W. Mächtle.** Analysis of Polymer Dispersions with an Eight-Cell-AUC-Multiplexer: High Resolution Particle Size Distribution and Density Gradient Techniques. 147-175
- **E. Matijevic.** *Chem. Mater.,* 1993, vol. 5, 412-426
- **Ullmann's.** Encyclopedia of Industrial Chemistry. Verlag, 1992, vol. A 23, 583-660
- **D.F. Evans ; H. Wennerström.** The Colloidal Domain. Verlag Chemie, 1994, 363-405
- **R.J. Hunter.** Foundations of Colloid Science. Clarendon Press, 1991, vol. I, 10-17
- Methoden der organischen Chemie. **Houben-Weyl.** Makromolekulare Stoffe. Georg-Thieme-Verlag, 1961, vol. XIV/1, 411-420
- Methoden der organischen Chemie. **Houben-Weyl.** Makromolekulare Stoffe. Georg-Thieme-Verlag, 1961, vol. XIV/1, 192-208
- **H. Stache.** Tensid-Taschenbuch. Carl-Hanser-Verlag, 1981
- **McCutcheon's.** Emulsifiers & Detergents. MC Publishing Company, 1989
- **T.G. Fox.** *Bull. Am. Phys. Soc.,* 1956, vol. 1, 123
- **Ullmann's.** Encyclopädie der technischen Chemie. Verlag Chemie, 1980, vol. 19, 18
- Ullmann's Encyclopedia of Industrial Chemistry. Verlag Chemie, 1992, vol. A21, 169
- **J. Brandrup ; E.H. Immergut.** *Polymer Handbook,* 1966
- POLYMER HANDBOOK. J.Wiley, 1975
- POLYMER HANDBOOK. J. Wiley, 1989
- **J. Brandrup ; H. Immergut.** Polymerhandbook. John Wiley & Sons, 1989, 133-141
- **K. Mosbach ; L. Andersson.** *Nature,* 1977, vol. 270, 259-261
- **P.L. Kronick.** *Science,* 1978, vol. 200, 1074-1076
- Analysis of Polymer Dispersions with an Eight-Cell-AUC-Multiplexer: High Resolution Particle Size Distribution and Density Gradient Techniques. **S.E. Harding et al.** Analytical Ultracentrifugation in Biochemistry and Polymer Science. Royal Society of Chemistry, 1992, 147-175